# EUROPEAN PATENT SPECIFICATION

(11) **EP 0 857 082 B1**
(45) Date of publication and mention of the grant of the patent: **10.04.2002**
(21) Application number: 95942777.4
(22) Date of filing: 30.12.1995
(51) Int. Cl.: B01J 20/20, B01J 20/18, B01J 20/30, B01D 53/02, C02F 1/28

(54) **A MANUFACTURING METHOD OF GRANULATED COMPLEX MOLECULAR SIEVE COMPOSITION HAVING MULTIFUNCTIONS**
HERSTELLUNGSMETHODE FÜR EINE MULTIFUNKTIONELLE, KOMPLEXE MOLEKULARSIEBZUSAMMENSETZUNG IN GRANULATFORM
PROCEDE DE FABRICATION D'UNE COMPOSITION DE TAMIS MOLECULAIRE A COMPLEXE GRANULE POSSEDANT PLUSIEURS FONCTIONS

(30) Priority: 31.07.1995 KR 9523319
(43) Date of publication of application: 12.08.1998
(73) Proprietor: KOREA RESEARCH INSTITUTE OF CHEMICAL TECHNOLOGY, Daejeon 305-343 (KR)
(72) Inventor: LEE, Jung-Min, Yusung-ku, Daejeon 305-340 (KR); SUH, Jeong-Kwon, Yusung-ku, Daejeon 305-333 (KR); JEONG, Soon-Yong, Seo-ku, Daejeon 302-280 (KR); JIN, Hang-Kyo, Yusung-ku, Daejeon 305-333 (KR); PARK, Byung-Ki, Yusung-ku, Daejeon 305-333 (KR); PARK, Chun-Hee, Kangnam-ku, Seoul 135-110 (KR); PARK, Jeong-Hwan, Seo-ku, Daejeon 302-282 (KR); KIM, Si-Wang, Yangchun-ku, Seoul 158-050 (KR); KIM, Jong-An, Seo-ku, Daejeon 302-173 (KR); PARK, Yeoun-Kee, Kwanak-ku, Seoul 151-014 (KR); LIM, Chang-Whan, Seo-ku, Daejeon 302-281 (KR)
(74) Representative: Weber, Dieter, Dr.
(86) International application number: PCT/KR95/00188
(87) International publication number: WO 97/04865

(56) References cited:
- EP-A- 0 170 026
- EP-A- 0 570 847

## Description

### FIELD OF THE INVENTION

The present invention relates to a manufacturing method of granulated complex molecular sieve composition having multi-functions and useful for removal agent of harmful gas of cigarette or treatment agent of water purification etc. as having multi-adsorption capacity, excellent anti-abrasion property and convenient process, in particular, to a manufacturing method which is comprised of granulating by spray-adding alkali metal silicate aqueous solution with mixture of zeolites of various types and activated carbon powder, and treating it with aqueous solution of alkali earth metal salt without calcination, and drying.

### DESCRIPTION OF THE RELATED ART

Zeolite is crystalline alumino silicate salt of the following formula(I).

M_{x/m}[(AlO₂)ₓ(SiO₂)_{y}]wH₂O (I)

wherein,
M is cation,
n is cation valence,
w is the number of water molecular, and the rate of y/x usually has values of 1-5 depending upon the structure.

Because said zeolite has about 3 to 10 Å of minute pore diameter, it represents molecular sieving effect.

Especially as a hydrophilic adsorbent, it has a strong adsorption capacity with polar molecule such as water and its adsorption capacity is great even under low partial pressure and high temperature.

An activated carbon is manufactured by method of carbonization of coconut husk, coal or wood etc. and activation under reduction atmosphere.

Its type is granule, fragment or powder and its pore diameter is 1 to 100 nm, and most of it is below 2 nm. Said activated carbon is hydrophobic adsorbent and has strong adsorption power with non-polar molecule, and its specific surface area maybe attained till more than 1200 m²/g.

As mentioned above, whereas zeolite is a hydrophilic adsorbent, activated carbon is a hydrophobic one, to assist its adsorption capacity each other, a manufacturing method of adsorbent having multi-functions by mixing of zeolite and activated carbon, and a manufacturing method of composition by combination of activated carbonization substance and substance of zeolite type or mixing of silicate compound and activated carbon have been often reported recently.

Regarding to this, Japanese non-examination patent sho 54-53669 discloses a manufacturing method of composition for ozon degradation by adding bentonite and sugar to mixture of zeolite and active carbon, and then forming, drying and calcination.

But this method uses natural clay such as bentonite as inorganic binder, therefore, the final product includes adulterated impurities.

And because the natural clay binder is a water-insoluble compound, its plasticity become low when it mix with water, therefore, to form as desired pattern, its plasticity must be maintained by certainly adding water-soluble compound of polymer series as organic binder.

And due to swelling of bentonite in water, the composition become dissolved, and so, to prevent it and to carbonize sugar as organic binder, drying process and calcination process under reduction atmosphere must be certainly proceeded.

Therefore, this method needs complex calcination equipment and enormous cost, and has a problem which due to contraction of bentonite in calcination process, dusts produce heavily according to decrease of anti-abrasion capability and adsorption capability goes down by decrease of specific surface area.

Because atmosphere is contaminated due to volatile oils produced in the carbonization process of organic binder, this method needs a removal system of these contaminative substances.

And Japanese non-examination patent pyong 4-4039 discloses a manufacturing method of wastewater treatment agent using oil-adsorption capability by adding blast furnace slag powder to zeolite. This method gives rise to ecological safety problem of the blast furnace slag component and because of bad plasticity, its granulation process is difficult, and its hydrophobic adsorption capability is low.

And Japanese non-examination patent sho 59-69146 discloses a manufacturing method of adsorbent of filter phase by adding bentonite and silicate compound to activated carbon. This method also has a problem which the pore of activated carbon is plugged by bentonite and silicate compound and its hydrophilic adsorption capability by molecular sieving effect is low.

EP A 0 570 847 discloses a method for the adsnrbent of organic compounds comprising activated carbon in an amorphous oxidic support formed from SiO₂ or Al₂O₃. However, this method requires a complex process such as acid treatment, oil precipitation, ageing and removal of residual salts and also has limitation in using a crystalline material such as a zeolite to mix with activated carbon.

To overcome the problem of said prior art, inventors of this invention developed an art improved plasticity and anti-abrasion capability of product by adding alkali earth metal silicate as inorganic binder and molasses as organic binder to mixture of zeolite and activated carbon (Korean patent application 94-18327). But this method also provokes said problems due to calcination process, and has limitations in improvement of adsorption capability and specific surface area.

Therefore, this inventors put an effort to solve these problems of the prior arts. As the result, this inventors developed a manufacturing method of composition which comprises (a) manufacturing of granulated composition by adding alkali metal silicate aqueous solution having good plasticity to mixture of zeolite and activated carbon, (b) and adding directly said composition to alkali earth metal salt aqueous solution without drying or calcination.

Like this, in this invention, without using of organic binder separately, the used water-soluble alkali metal silicate is converted into water-insoluble alkali earth metal silicate, therefore, anti-abrasion capability of the granulated composition become high and their dissolution in water is prevented, and simultaneously the inorganic binder also has a adsorption capability, and because zeolite contained in the granulated compositions is converted into zeolite of alkali earth metal type, specific surface area of the granulated compositions can be improved greatly.

The objection of this invention is to provide a manufacturing method of granulated complex molecular sieve composition having multi-functions, and useful for the adsorption of water and organic solvent, and the separation of substance using molecular sieving effect etc.

### SUMMARY OF THE INVENTION

The present invention relates to a manufacturing method of granulated complex molecular sieve composition which is characterized in comprising the steps of spray-adding alkali metal silicate aqueous solution to mixture of zeolite and activated carbon powder, and then granulating it and soaking it with alkali earth metal salt aqiueous solution.

More detailed description of this invention is as follows.

This invention relates to a manufacturing method of granulated complex molecular sieve composition having various adsorption capability by developing micropores.

First, after zeolite powder of A type and activated carbon powder is mixed, added it to plowshare mixer and then mixed sufficiently.

And then alkali metal silicate aqueous solution is sprayed to it by nozzle and is mixed, and granulated at 0.2 to 5 mm size.

Besides zeolite of A type, zeolite of X, Y, ZSM type or natural zeolite etc. can be used.

In this invention, said activated carbon is manufactured from coconut husk, and it is powder type and has value of more than 1000 m²/g as specific surface area. And activated carbon of lignite series, soft coal series, wood type also can be used.

As said alkali metal silicate aqueous solution, sodium silicate aqueous solution or potassium silicate aqueous solution is used, and as sodium silicate aqueous solution, the aqueous solution containing 15 to 38 wt% of sodium silicate is used. And besides plowshare mixer as granulation equipment, rotating granulator, extruder, fluidized bed granulator or tablet press can be used.

Said granulated composition is added to alkali earth metal salt aqueous solution, in that case, the alkali metal silicate component contained as binder is converted into alkali earth metal silicate as insoluble and simultaneously, said zeolite of 4A type is converted into zeolite of alkali earth metal A type. And then, if liquefied component of it is removed and dried by fluidized bed dryer, the granulated complex molecular sieve composition of this invention is manufactured. As used alkali earth metal aqueous solution in this invention, calcium chloride(CaCl₂) aqueous solution or magnesium chloride(MgCl₂) aqueous solution is used, and as calcium chloride aqueous solution, the aqueous solution containing 10 to 45 wt% of calcium chloride is used. When said granulation composition is treated with alkali earth metal salt(ex: CaCl₂) aqueous solution, the detailed chemical reactions occurred in zeolite and silicate are as following schemes.

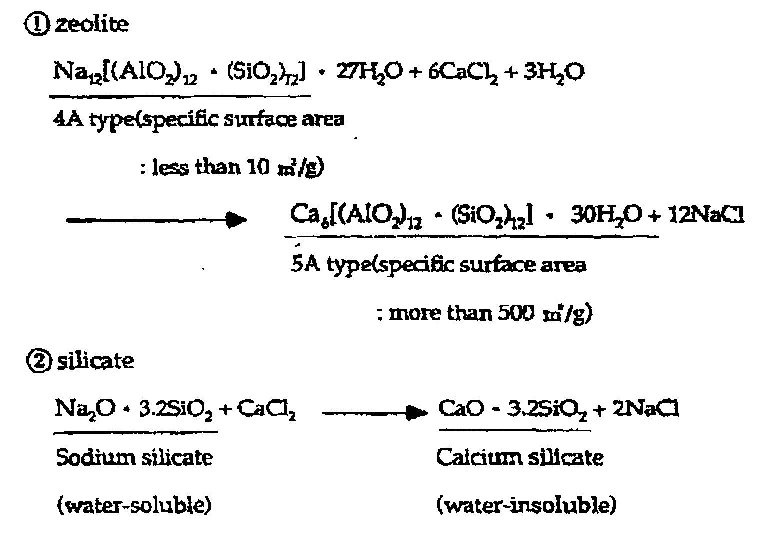

As mentioned above, this invention has an advantage of omission of the known pretreatment process which zeolite powder is converted into alkali earth metal zeolite powder. And by producing water-insoluble alkali earth metal silicate in the process, binding capacity and water resistant property of the granulated composition is improved greatly, therefore, its calcination process at high temperature which is certainly carried out in the known manufacturing method does not need in this invention.

The granulated complex molecular sieve composition manufactured according to this invention is composed of 20 to 60 wt% of zeolite, 15 to 50 wt% of activated carbon and 10 to 35 wt% of alkali earth metal silicate, as solid component. When the content of above components are below or over these range, it is difficult to own its hydrophobic/hydrophilic adsorption capability and to acquire the granulated composition having the desired anti-abrasion capability, and there is a problem which its adsorption capability is low due to the severe plugging of micropores of the adsorbent.

Said granulated composition has several properties such as more than 500 m²/g of specific surface area, more than 320 mg/g of iodine adsorption capacity, more than 65 mg/g of decoloration capacity of methylene blue and more than 99.5 % of anti-abrasion capability.

Consequently, the granulated composition of this invention has excellent plasticity and anti-abrasion capability and does not need calcination process, and its adsorption capability does not go down due to binder.

Therefore, the granulated composition is useful for adsorption of water, organic solvents and poisonous gas, treatment of service water and sewage and separation of substance using molecular sieve property, in detail, removal agent of harmful gas of cigarette, treatment agent for water purification, air purification agent, deodorization agent, catalysts and support of adsorbent etc. The present invention is represented by the Examples below, which are intended to be exemplary only.

### EXAMPLE 1

13.0 kg of zeolite powder of 4A type(water content: 5.6 wt%) and 6.5 kg of activated carbon powder(water content : 6.2 wt%) were added to plowshare mixer of 130 *l* capacity(Germany, Lödige) and mixed for 6 minutes at 200 rpm of spindle rotating speed and 3600 rpm of chopper rotating speed.

The solution prepared by mixing 12.5 kg of sodium silicate aqueous solution(K.S standard, water glass No. 3) with 2.5 kg of water was injected into said mixture for 8 minutes by nozzle and was mixed, and then granulated for 15 minutes. By this, the granulated composition having 1.2 mm of average diameter was manufactured. And said granulated composition was added to water solution of 75 °C which 6.2 kg of calcium chloride was added to 16.0 kg of water and dissolved, and was treated for 1 hour. And then it was filtered through sieve of 60 mesh and filtrate was removed. 15.0 kg of water at 70 °C was twice added to residue material and washed, and dried with fluidized bed dryer of 90 °C.

By the result, 24.1 kg of granulated complex molecular sieve composition (water content : 4.3 wt%) was acquired. The physical properties of said composition is as following table.

### EXAMPLE 2

10.0 kg of zeolite powder of 4A type(water content : 5.6 wt%) and 9.5 kg of activated carbon powder(water content : 6.2 wt%) were added to plowshare mixer of 130 *l* capacity(Germany, Lödige) and mixed for 6 minutes at 200 rpm of spindle rotating speed and 3600 rpm of chopper rotating speed.

The solution prepared by mixing 13.0 kg of sodium silicate aqueous solution (K.S standard, water glass No. 3) with 3.2 kg of water was injected into said mixture for 8 minutes by nozzle and was mixed, and then granulated for 15 minutes. By this, the granulated composition having 1.3 mm of average diameter was manufactured. And said granulated composition was added to water solution of 75 °C which 5.6 kg of calcium chloride was added to 16.0 kg of water and dissolved, and was treated for 1 hour. And then it was filtered through sieve of 60 mesh and filtrate was removed. 15.0 kg of water at 70 °C was twice added to residue material and washed, and dried with fluidized bed dryer of 90 °C.

By the result, 24.3 kg of granulated complex molecular sieve composition (water content : 4.5 wt%) was acquired. The physical properties of said composition is as following table.

### EXAMPLE 3

15.0 kg of zeolite powder of 4A type(water content: 5.6 wt%) and 4.5 kg of activated carbon powder(water content : 6.2 wt%) were added to plowshare mixer of 130 *l* capacity(Germany, Lödige) and mixed for 6 minutes at 200 rpm of spindle rotating speed and 3600 rpm of chopper rotating speed.

The solution prepared by mixing 11.3 kg of sodium silicate aqueous solution(K.S standard, water glass No. 3) with 2.3 kg of water was injected into said mixture for 8 minutes by nozzle and was mixed, and then granulated for 15 minutes. By this, the granulated composition having 1. 1 mm of average diameter was manufactured. And said granulated composition was added to water solution of 75 °C which 6.5 kg of calcium chloride was added to 16.0 kg of water and dissolved, and was treated for 1 hour. And then it was filtered through sieve of 60 mesh and fitrate was removed. 15.0 kg of water at 70 °C was twice added to residue material and washed, and dried with fluidized bed dryer of 90 °C.

By the result, 23.8 kg of granulated composite molecular sieve composition (water content : 4.1 wt%) was acquired. The physical properties of said composition is as following table

### COMPARATIVE EXAMPLE 1

9.9 kg of zeolite powder of 4A type was added to 25.0 kg of calcium chloride aqueous solution contained 18 wt% of calcium chloride and stirred at 70 °C, for 2 hrs, and ion-exchanged. After it was filtered and washed, and dry-sprayed at 120 °C. 10.0 kg of zeolite powder of 5A type was acquired. Said pre-treated zeolite of 5A type, 7.5 kg of activated carbon powder and 7.5 kg of magnesium silicate powder were added to plowshare mixer and mixed for 6 minutes. The solution prepared by adding 2.5 kg of molasses to 5.0 kg of water was spray-injected into said mixture for 1 to 3 minutes by nozzle, and treated for 30 minutes, and so, 24.2 kg of granulated composition having 1.5 mm of average diameter was acquired.

The composition was dried at 120 °C for 3 hrs with convection-type dryer, and calcinated at 650 °C for 2 hrs under nitrogen atmosphere. By this, the granulated complex molecular sieve composition was manufactured. The physical properties of said composition is as following table.

### COMPARATIVE EXAMPLE 2

Besides using of calcium silicate instand of magnesium silicate, was carried out by same method as COMPARATIVE EXAMPLE 1. The physical properties of said composition is as following table.

### COMPARATIVE EXAMPLE 3

10 kg of zeolite powder of 5A type treated by same method as COMPARATIVE EXAMPLE 1,75 kg of activated carbon powder and 7.5 kg of magnesium silicate powder were added to plowshare mixer and mixed for 6 minutes. The solution prepared by mixing 2.0 kg of molasses with 4.9 kg of water was spray-injected into said mixture for 30 minutes by nozzle. By this, the granulated composition having 1.1 mm of average diameter was acquired.

The solution prepared by mixing 0.5 kg of molasses with 0.13 kg of water was spray-injected into said composition by nozzle, and so, the surface of granulated composition was coated.

Remainder process was carried out by same method as COMPARATIVE EXAMPLE 1. The physical properties of said composition is as following table.

### COMPARATIVE EXAMPLE 4

Besides using of bentonite instead of magnesium silicate powder, and sugar instead of molasses, respectively, was carried out by same method as COMPARATIVE EXAMPLE 1. The physical properties of said composition is as following table.

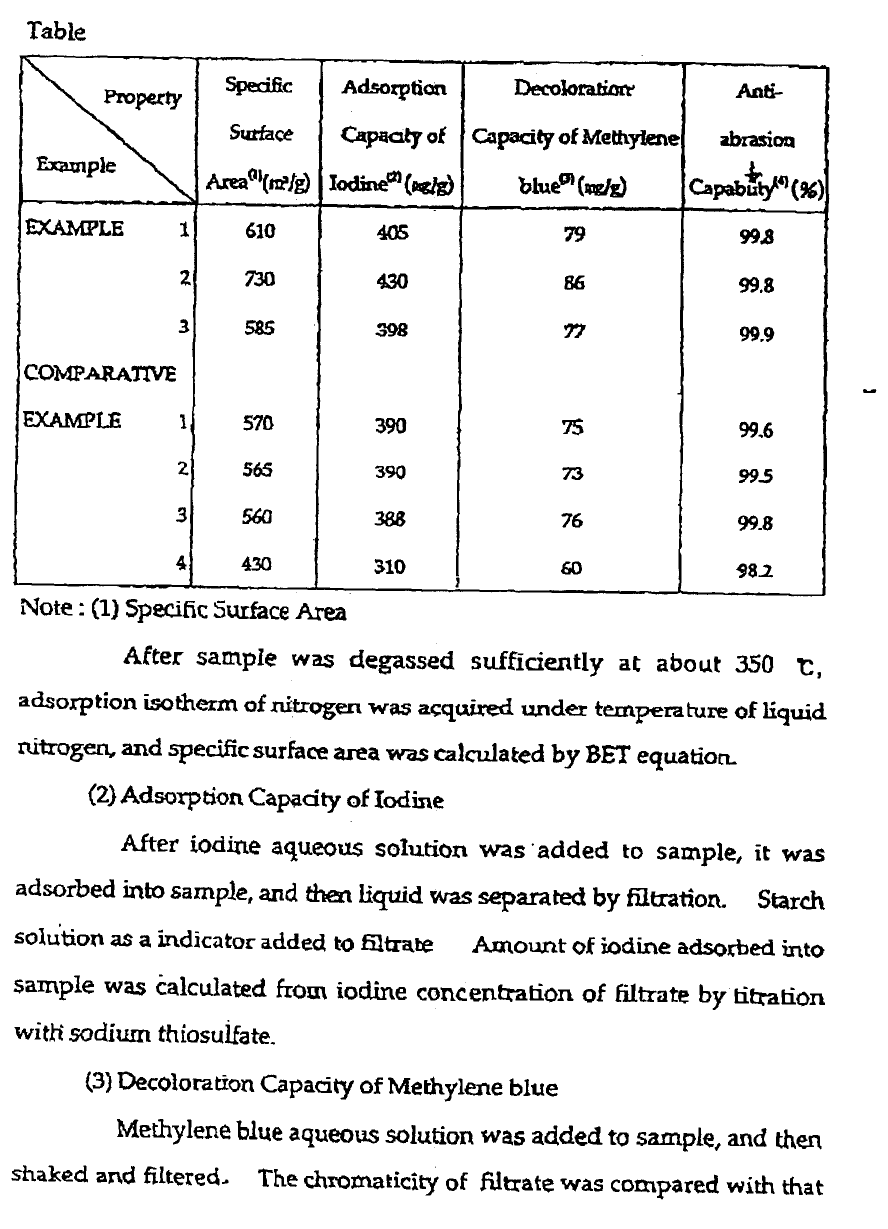

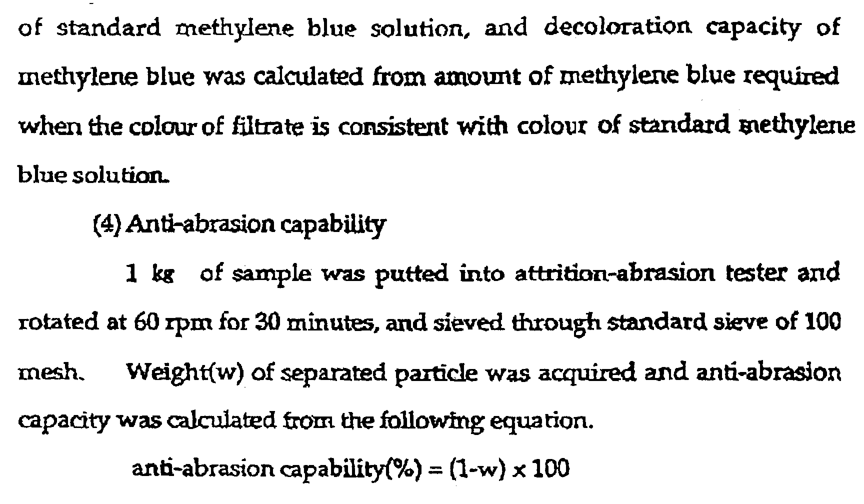

## Claims

1. A manufacturing method of granulated complex molecular sieve composition having multi-functions, which is **characterized in** comprising the steps of spray-adding alkali metal silicate aqueous solution to mixture of zeolite and activated carbon powder, granulating it and then treating with alkali earth metal salt aqueous solution and drying.

2. The manufacturing method according to claim 1, wherein said zeolite is 4A type.

3. The manufacturig method according to claim 1, wherein said alkali metal silicate aqueous solution contains 15 to 38 wt% of sodium silicate.

4. The manufacturing method according to claim 1, wherein said alkali earth metal salt aqueous solution contains 10 to 45 wt% of calcium chloride.

5. A granulated complex molecular sieve composition having multi-functions and containing zeolite and activated carbon, which is **characterized in** comprising of 20 to 60 wt% of zeolite, 15 to 50 wt% of activated carbon and 10 to 35 wt% of alkali earth metal silicate, as solid component.

6. The granulated complex molecular sieve composition according to claim 5, wherein said alkali earth metal silicate is calcium silicate.

7. The granulated complex molecular sieve composition according to claim 5, wherein said composition has more than 500 m²/g of specific surface area, more than 320 mg/g of adsorption capacity of iodine, more than 65 mg/g of decoloration capacity of methylene blue and more than 99.5 % of anti-abrasion capability, as adsorption property.

## Patentansprüche

1. Verfahren zur Herstellung einer multifunktionalen, gekörnten, komplexen Molekularsiebzusammensetzung, welches **gekennzeichnet ist durch** die Stufen, in denen man eine wässrige Alkalimetallsilikatlösung zu einem Gemisch aus Zeolith und Aktivkohlepulver **durch** Sprühen hinzufügt, dieses granuliert und anschließend mit wäßriger Erdalkalimetallsalzlösung behandelt und trocknet.

2. Herstellungsverfahren nach Anspruch 1, wobei der Zeolith vom 4A-Typ ist.

3. Herstellungsverfahren nach Anspruch 1, wobei die wäßrige Alkalimetallsilikatlösung 15 bis 38 Gew.-% Natriumsilikat enthält.

4. Herstellungsverfahren nach Anspruch 1, wobei die wäßrige Erdalkalimetallsalzlösung 10 bis 45 Gew.-% Kalziumchlorid enthält.

5. Gekörnte, komplexe Molekularsiebzusammensetzung, die multifunktional ist und Zeolith und Aktivkohle enthält, welche **dadurch gekennzeichnet ist, daß** sie als festen Bestandteil 20 bis 60 Gew.-% Zeolith, 15 bis 50 Gew.-% Aktivkohle und 10 bis 35 Gew.-% Erdalkalimetallsilikat enthält.

6. Gekörnte, komplexe Molekularsiebzusammensetzung nach Anspruch 5, wobei das Erdalkalimetallsilikat Kalziumsilikat ist.

7. Gekörnte, komplexe Molekularsiebzusammensetzung nach Anspruch 5, wobei die Zusammensetzung als Adsorptionseigenschaft eine spezifische Oberfläche von mehr als 500 m²/g, eine lodadsorptionskapazität von mehr als 320 mg/g, eine Methylenblauentfärbungskapazität von mehr als 65 mg/g und eine Anti-Abriebsbeständigkeit von mehr als 99,5 % hat.

## Revendications

1. Procédé de fabrication d'une composition de tamis moléculaire à complexe granulé possédant plusieurs fonctions, **caractérisé en ce qu'**il comprend les étapes consistant à : ajouter par projection une solution aqueuse d'un silicate d'un métal alcalin à un mélange de zéolite et d'une poudre de carbone activé, à former en granules cette composition, puis à la traiter avec une solution aqueuse d'un sel de métal alcalino terreux et à la sécher.

2. Procédé de fabrication selon la revendication 1, dans lequel ladite zéolite est du type 4A.

3. Procédé de fabrication selon la revendication 1, dans lequel ladite solution aqueuse de silicate de métal alcalin contient de 15 à 38% en poids de silicate de sodium.

4. Procédé de fabrication selon la revendication 1, dans lequel ladite solution aqueuse d'un sel de métal alcalino terreux contient de 10 à 45% en poids de chlorure de calcium.

5. Composition de tamis moléculaire à complexe granulé possédant plusieurs fonctions et contenant une zéolite et du carbone activé, **caractérisée en ce qu'**elle comprend de 20 à 60% en poids de zéolite, de 15 à 50% en poids de carbone activé et de 10 à 35% en poids d'un silicate de métal alcalino terreux, en tant que composant solide.

6. Composition de tamis moléculaire à complexe granulé selon la revendication 5, dans laquelle ledit silicate de métal alcalino terreux est un silicate de calcium.

7. Composition de tamis moléculaire à complexe granulé selon la revendication 5, dans laquelle ladite composition a une aire de surface spécifique supérieure à 500m²/g, une capacité d'adsorption d'iode supérieure à 320 mg/g, une capacité de décoloration du bleu de méthylène supérieure à 65 mg/g et une capacité anti-abrasion supérieure à 99,5%, en tant que propriété d'adsorption.
